(19) Europäisches Patentamt
European Patent Office
Office européen des brevets

(11) **EP 3 992 897 A1**

(12) **EUROPEAN PATENT APPLICATION**

(43) Date of publication:
**04.05.2022 Bulletin 2022/18**

(21) Application number: **20020503.7**

(22) Date of filing: **01.11.2020**

(51) International Patent Classification (IPC):
*G06Q 40/06* *(2012.01)*

(52) Cooperative Patent Classification (CPC):
**G06Q 40/06**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Endangered Wildlife OÜ
10621 Tallinn (EE)**

(72) Inventor: **GAVRON, SHANA VIDA
28200 Châteaudun (FR)**

(54) **METHOD TO CALCULATE BIODIVERSITY ASSET VALUE**

(57) The present invention is a method to be used for a computer-based calculator to calculate (i) the total economic value of a species and (ii) the impact value of an investment into the conservation of the species. The lack of a standard and comprehensive biodiversity valuation tool makes it difficult for stakeholders, such as capital investors, NGOs or government agencies, to gauge the ecological impact of conservation or investment proposals or decisions. The present invention is a novel method and implementation process that pins an asset value to a species using an integrated approach, using data extracted from disparate media sources such as photo-sharing, e-commerce websites and social networks; as well as demographic data, weaving them together into a cumulative asset value to be calculated using a computer-based calculator. The invention would be used by governments, NGO's and capital investors to drive their budget, conservation and investment decisions.

**EP 3 992 897 A1**

**Description**

Field of the Invention

The present invention relates to the Environmental Valuation field. Environmental Valuation includes methods to assign monetary value to environmental goods or services. This invention is a novel integrated method and process that will be used in the form of a computer-based calculator for the valuation of individual wildlife species. Furthermore, it includes a novel method to estimate the impact value to be acquired by an investment in the conservation of the wildlife species.

Background of the invention

The total economic value framework (Pearce et al., 2006) is the standard for the valuation of environmental goods and separates the potential values in two broad categories: the use values and the non-use values (De Valck & Rolfe, 2019). Use values are those that may ensue from the direct or indirect use of the environmental good (e.g. food, timber, tourism, water quality) and the option value. In this situation, the option value refers to a real, but not yet materialised, potential that exists for the environmental good to have a use or value in the future. Non-use values may vary and can be abstract, from the cultural to the aesthetic to the bequest value and they refer to the experience one gains from the environmental good (Chan et al., 2011).

To estimate the use values of an environmental good, such as a wildlife species, one can apply direct market valuation techniques that analyze the economic value that it creates by providing direct goods and services (e.g. timber, food) and the indirect economic value that it creates by existing in an area (e.g. tourism) (Bertram & Rehdanz, 2013; Laurila-Pant et al., 2015). For the estimation of an environmental goods' non-market use and non-use values, revealed preferences techniques can be applied, which involve analyses of the choices and expenditures that consumers made related to it (Boyle, 2003). These techniques have been updated over the recent years to take advantage of the vast amount of preferences data provided by the rise of social media platforms (Ghermandi, 2018).

There is no standardized way to calculate the option value of an environmental good. The option value can be approached through the estimation of an "option price", through survey-based techniques (Haghjou et al., 2019; Pascual et al., 2010) that ask people to state a price to retain the option for the existence of the good in the future. Other techniques involve addressing the option value issue through cost-benefit analyses (Bulte et al., 2002; Di Corato et al., 2018) or approaching the environmental good as an insurance device (Augeraud-Véron et al., 2019). Option value is often treated as a theoretical value, and the approaches to estimate are still at a conceptual and/or experimental state.

With the exception of the valuation of ecosystem services (Bartkowski et al., 2015), TEV for individual wildlife species has stayed within the research realm, so far not standardized or included in policy planning and capital investing (Petrolia et al., 2020), due in part to its complex nature (Seddon et al., 2016). More so than policy makers, there is the need for conservation organizations to know the financial value of the species that they conserve and manage, and for capital investors to know the return that they will acquire from an investment in the conservation of the particular species.

Evaluators such as capital investors, NGOs and government agencies find it difficult to evaluate the ecological impact of an investment proposal in its raw form. This is because there is no standard methodology or metric to measure this impact and no specialised tool to assist in this process. This lack of standard metric also means that biodiversity conservation efforts remain forever shy of maximum impact, and fail to strike a chord with the masses. This is because these efforts are articulated in metrics which fail to rub the masses in any form. Biodiversity has not been viewed as a commodity before, thus being assigned an asset value.

Summary of the invention

This invention is the method and process that will be used in a computer-based calculator to calculate the total economic value of a specific wildlife species' population, as well as the impact value of a potential investment into the conservation of the species. A Bayesian Network is built including the target species and the species with which it cohabits. Six types of values are calculated: (1) Willingness-to-Pay, (2) Carbon Credits and (3) Economic, (4) E-commerce, (5) Human-Centric and (6) Option Pricing. All of these values are assigned to the species and their sum is the total economic value of the species' population at its current state. Building a second Bayesian Network, with the projected population increase by conservation scenarios, the impact value of a potential investment into the conservation of the species can be estimated.

The particular advantage of this invention is that it provides a standardised and quantifiable method and process that can be simply and practically applied, using a computer-based calculator. This would enable a user of the calculator to estimate the total economic value of the species they are interested in, as well as the impact value of a potential investment into the conservation of the species.

Brief description of drawings

Figure 1 shows a theoretical logistic growth model, with the red dashed line showing the theoretical carrying capacity (K) limit of the target species.

Figure 2 shows a theoretical Bull Call Spread Options Strategy based on a long position with an exercise price set at the value when the population is at its minimum viable population (MVP) and short position with an exercise price set at the value when the population is at its carrying capacity (K).

Figure 3 shows the basic Bayesian network built as part of the description of carrying out the invention, using the cheetah (*Acinonyx jubatus*) as a model target species for the implementation of this invention. The conditional dependency tables and the links between the cheetah and the species with which it cohabits in Kruger National Park, South Africa are showcased.

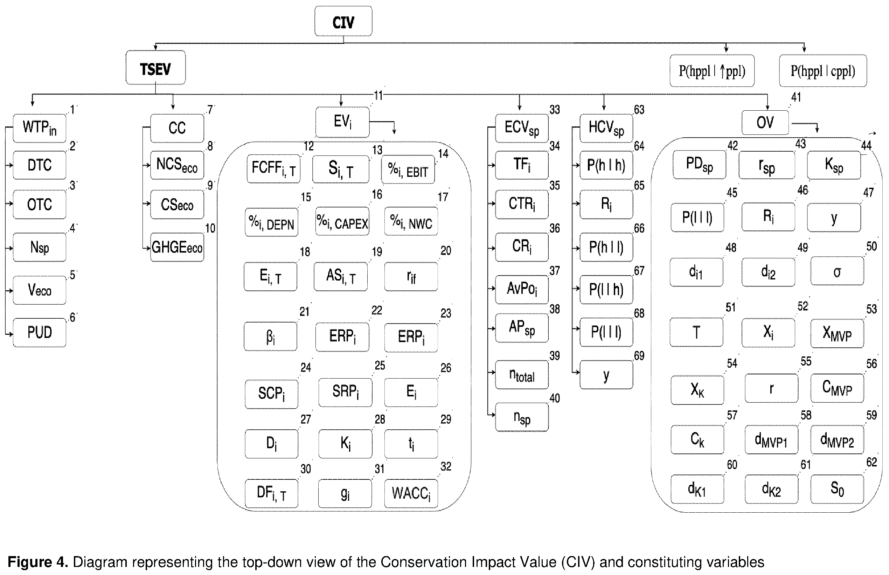

Figure 4 is a top-down representation of the calculator of species total economic, conservation and impact value decomposed into its constituting elements.

Detailed description of the invention

The target species and the species with which it co-habits are built into Bayesian networks. Bayesian networks are models that represent the multitude of complex conditional dependencies between variables in a relatively clear way. The Bayesian network contains the species population data, the links between the species and their conditional dependency tables that showcase the probabilistic relationships between the species populations. The use of the Bayesian networks at each step of this invention is elaborated below, and it is twofold: First, it provides a way to visualize to a degree the ecosystem of the species and ascertain the importance of the population status of the target species for the rest of the species. Second, it allows for the assessment of investment and conservation scenarios, and the results both from the initial Bayesian network and the scenario-based Bayesian networks are utilized in the calculation of the impact value.

The calculation of the total economic value of a species is decomposed into six constituent formulas, which are highlighted one by one below:

1. Willingness to pay (WTP (1))

Willingness to pay for the target species is estimated with the Travel Cost Method (TCM) (Ward and Beal, 2000). A combination of methods proposed in Ghermandi (2018) and Sinclair et al. (2018) are followed, with some modifications. A database of geotagged photo metadata is created, from photographs uploaded to photo-sharing websites during the most recent full calendar year. Publicly shared photos from widely-used photo sharing websites are sourced, and data is extracted for specific keywords (i.e. the target species name) including users' home locations. This search only includes geo-located photos within the area of interest (i.e. the area where the specific species' population resides). If a user does not provide home location in their profile, metadata from their entire profile are analyzed (Bojic et al., 2015; Li et al., 2013) and home location is assumed as the place from where the user uploaded the largest number of photographs and there is at least a 10-day span between the first and last photo. Home location is determined at the lowest administrative level possible.

Unique Photo-User-Days (PUDs (6)), i.e. unique user - day combinations are calculated by removing multiple photographs taken by one individual visitor in the same day and calculating the total number of PUDs for each visitor. The TCM included two kinds of travel costs: the direct travel cost (DTC (2)), i.e. the amount spent by each user to get to the target ecosystem and the opportunity cost of travel (OTC (3)), i.e. benefit that a person gives up in order to travel. To estimate direct travel costs, for users that traveled by plane, an average cost of airplane ticket price from home location to the specific area is calculated. For local visitors, direct travel cost is calculated by multiplying the average petrol cost per kilometer by the distance traveled from home location to the specific area. Monthly wage rates for the most recent available year are obtained from the International Labour Organization (ILO), converted to daily wage rates using 22 working days per month, and 1/3 of the average daily wage multiplied by the number of PUDs (6) provides the opportunity cost of time for each visitor (Fezzi et al., 2014). Median household income at the lowest administrative level is obtained by the certified statistics authority in each visitor's home location. A truncated Poisson regression is performed, to account for the fact that only positive visitor values can be observed, with the dependent variable in the model being the number of PUDs for each visitor and the independent variables being the direct travel cost, the opportunity cost and the median income for each visitor.

$$logy_i = \beta_0 + \beta_{DTCi} (DTC_i) + \beta_{OTCi} (OTC_i) + \beta_{INi} (IN_i) + \varepsilon$$

(Sinclair et al., 2018)

where $y_i$ is the number of PUDs for $i^{th}$ visitor, $\beta_0$ is the intercept of the model, $DTC_i$ is the direct travel cost for $i^{th}$ visitor and $\beta_{DTCi}$ is the coefficient of DTC, $OTC_i$ is the opportunity cost for $i^{th}$ visitor and $\beta_{OTCi}$ is the coefficient of OTC, $IN_i$ is the median household income for $i^{th}$ visitor and $\beta_{INi}$ is the coefficient of IN, and $\varepsilon$ is the error term.

WTP per individual visitor is calculated as the consumer surplus per visit (Creel and Loomis, 1990):

$$WTP_{trip} = -1 / \beta_{DTC}$$

where $\beta_{DTC}$ is the regression coefficient of the direct travel cost.

Multiplying $WTP_{trip}$ by the total known number of visitors in the last full calendar year, and by the target species relative weight (estimated as a percentage of the visitors' interest, inferred through published literature and expert knowledge), the WTP for the specific species population is obtained:

$$WTP_{sp} = w_{sp} \times WTP_{trip} \times v_{eco}$$

where $WTP_{sp}$ is WTP for species sp, $w_{sp}$ (6) is the weight of species sp, $WTP_{trip}$ is as estimated above and $v_{eco}$ (5) is the number of visitors to the ecosystem.

Using the population size of the target species, a value per individual can be assigned:

$$WTP_{in} = WTP_{sp} / n_{sp}$$

where $WTP_{in}$ (1) is WTP for one individual of the target species, $WTP_{sp}$ is WTP for species sp and $n_{sp}$ (4) is the population size of the target species in the particular ecosystem.

With data on the demographics of the population, a relative weight per age group based on its contribution to the population can also be incorporated in the $WTP_{in}$ calculations.

2. Carbon Credits Value (CC (7))

The concept of carbon credits (CC (7)) is a market-oriented mechanism to reduce greenhouse gas emissions. One carbon credit is a permit that allows the entity that holds it to emit a tonne of carbon dioxide or other greenhouse gases. Carbon credits may be traded between companies of countries to help balance total worldwide emissions, which means that carbon credits hold a monetary value. Potential carbon credits revenue for the area in which the target species resides will be estimated as its net carbon storage capacity, i.e. the excess ($NCS_{eco}$) of carbon stock ($CS_{eco}$) that it holds after accounting for greenhouse gasses emissions ($GHGE_{eco}$):

$$NCS_{eco} = (CS_{eco} - GHGE_{eco})$$

$CS_{eco}$ (9) is extracted for the area from GIS data downloaded from verified online sources. Greenhouse Gases emissions $GHGE_{eco}$ (10) can be estimated using two approaches, depending on data availability for the particular area. The first approach involves downloading GHG emissions data from verified online sources and calculating total $GHGE_{eco}$ (10) for the area covered by the target ecosystem. The second approach involves downloading data for GHG emissions per capita from verified online sources and population density data for the area and estimating GHG emission by multiplying these two values.

Once $NCS_{eco}$ (8) has been calculated, the carbon credit value that it holds can be estimated:

$$CC = w_i \times Price\ per\ GHG\ tonne \times NCS_{eco}$$

To estimate CC, the current price for one carbon credit (i.e. for the emission of 1 tonne of GHG) in a carbon market (e.g. EU emissions trading system) must be extracted from a verified source. The CC value will be weighted by the relative contribution of the target species to carbon sequestration in the target area. The estimation of CC value may not find application in all species, therefore in some cases it will have a value of 0.

3. Economic Value (EV(11))

The calculation of the Economic Value of the target species is based on a novel modification of the traditional discounted cash flow valuation (DCF) model. The DCF model is a widely accepted method to calculate the financial value of an equity-based asset (Viebig, Varmaz and Poddig, 2008). As a measure of economic value, there are 27 high-level sectors or sources that can be linked to biodiversity as an associated economic activity. These sectors are mentioned in Table 1 below.

**Table 1**

| Advertising | Apparel | Alcoholic beverages |
|---|---|---|
| Soft beverages | Building materials | Business/consumer services |
| Pharmaceutical drugs | Education | Environmental/waste services |
| Farming/aqriculture | Food processing | Food wholesalers |
| Green/renewable energy | Healthcare products | Hotel |
| Household products | Packaging/containers | Paper/forest products |
| Real estate development | Recreation/tourism | Research |
| Restaurant/dining | Retail (grocery/food) | Retail (online/special lines) |
| Employment | Government | Veterinary services |

In order to place a value on these 27 generic activities, each one is assessed using a DCF model based on free cash flow to the firm (FCFF (12)) for sector *i* during year *T*:

$$FCFF_{i,T} = S_{iT}(\%_{i,EBIT}(1 - t_i) + \%_{i,DEPN} - \%_{i,CAPEX} + \%_{i,NWC})$$

where

$S_{iT}$ = forecasted sales revenue (13)
$\%_{i,EBIT}$ = forecasted operating profit as a percentage of sales (14)
$t_i$ = the corporate tax rate (29)
$\%_{i,DEPN}$ = forecasted depreciation as a percentage of capital expenditure (15)
$\%_{i,CAPEx}$ = forecasted capital expenditure or investment as a percentage of sales (16)
$\%_{i,NWC}$ = forecasted changes in net working capital (accounts receivables plus inventory less accounts payables) as a percentage of sales (17).

This means that the FCFF for sector *i* during year *T* is based on the estimated sales revenue for sector *i* during year *T* multiplied by operating profit for sector *i* as a percentage of sales revenue plus depreciation for sector *i* as a percentage of sales revenue less capital expenditure for sector *i* as a percentage of sales revenue less net working capital for sector *i* as a percentage of sales revenue.
In order to calculate the FCFF, it is therefore necessary to estimate sales revenues, which will be variable to the specific case, but, in general, would be based on price multiplied by quantity, and the assumption that the sectors will function at industry average levels. These industry averages are sourced from http://pages.stern.nyu.edu/~adamodar/. The data is compiled by Dr Aswath Damodaran from the Stern School of Business at New York University who compiled the data from Bloomberg, Morningstar, Capital IQ and Compustat.
A slight modification to the above DCF formula is made for employment, in that this represents the income generated through employment related to the conservation activities. Typically, this would be considered as an expense, but in this circumstance, it is considered to be an economic benefit of conservation. Therefore, the employment factor is calculated as:

$$FCFF_{i,T} = E_{iT} * AS_{iT}$$

where

$E_{iT}$ = the number of people employed (18)
$AS_{iT}$ = the average monthly salary (19)

The FCFFs are discounted back at the weighted average cost of capital (WACC) (Grabowski, 2018 (32)), adjusted to include a novel modification. This is based on the industry-accepted method of calculating WACC (adjusted for each specific sector), with an additional risk premium to account for the probability of species extinction.

$$WACC_i = \left(r_{i,f} + \beta_i * ERP_i + CRP_i + SCP_i + SRP_i\right) * \frac{E_i}{D_i + E_i} + (k_i * (1 - t_i)) * \frac{D_i}{D_i + E_i}$$

where

$r_{i,f}$ = the risk free rate, generally defined as a 10 year government bond rate for the country in which the species are being valued (20)
$\beta_i$ = the industry-specific Beta (21)
$ERP_i$ = the equity risk premium (22)
$CRP_i$ = the country risk premium, sourced from http://pages.stern.nvu.edu/~adamodar/ (23)
$SCP_i$ = the small company premium (Peek, 2016) (24)
$SRP_i$ = the species risk premium (25)
$E_i$ = the level of equity (26)
$D_i$ = the level of financial debt (27)
$t$ = the corporate tax rate (29)
$k_i$ = the cost of debt (28)

The SRP (25) acts as the equivalent to the company specific premium that would normally be included in the cost of equity calculation. This is a highly objective addition to the calculation and can be based on a ranking table. Based on expert knowledge, we have predefined a SRP (25) relative to the probability of extinction of the species as per Table 2 below.

**Table 2**

| P(Extinction) | <10% | <20% | <30% | <40% | <50% | <60% | <70% | <80% | <90% | <100% |
|---|---|---|---|---|---|---|---|---|---|---|
| SRP | 1% | 2% | 3% | 4% | 5% | 6% | 7% | 8% | 9% | 10% |

The WACC (32) is used to calculate the annual discount factor (DF (30)) with which the FCFFs are discounted to calculate the present value of the cash flows:

$$DF_{i,T} = \frac{1}{(1 - WACC_i)^T}$$

To calculate the enterprise value of each sector (EntV (11)), it is necessary to discount the FCFFs annually back for 10 years plus the discounted terminal value. The terminal value is the estimated year 11 FCFF running for perpetuity. To represent perpetuity, the terminal FCFF (12) is adjusted by the WACC less the terminal growth rate (g):

$$EntV_i = \sum_{i=1}^{n} \left(\sum_{T=1}^{10} (DF_{i,T} * FCFF_{i,T}) + DF_{i,10} * \left(\frac{FCFF_{i,11}}{WACC_i - g_i}\right)\right)$$

The economic value (EV (11)) is then calculated as the sum of the individual sector EntV's as below:

$$EV = \sum_{i=1}^{n} EntV_i$$

In calculating the Economic Value, there is some flexibility from one wildlife species to another, as not all species are able to support all of the same set of sector activities. Therefore, there is discretion in terms of selecting which of the 27 economic activities should be attributed to each species during the valuation process. For those activities that are not applicable, a value of EUR 0 is applied.

4. E-commerce Value (ECV(33))

E-commerce value approaches the target species as a potential product in e-commerce platforms. The value is assigned to the target species specific population. Price data from e-commerce websites is extracted for products related to the target species (i.e. books, toys, movies, clothing etc.), added to the platform within a given calendar year. An average price is then calculated.

The top five (by follower numbers) relevant influencers on major photo (Instagram) and video sharing (YouTube) platforms are identified and their total number of followers are calculated. The most recent click-through (i.e. the ratio of users who click on a specific link to the number of total users who view it) and conversion (i.e. the percentage of users that convert into customers) rates corresponding to each platform is retrieved from a verified source. The average number of daily posts converted to sales are calculated for each platform, by multiplying the average number of daily posts per platform by the values of the click-through and conversion rates, which are then converted to an annual number by multiplying it by 365:

$$C_{sp} = \sum_{i=1}^{n} (TF_i \; x \; CTR_i \; x \; CR_i \; x \; AvPo_i) \; x \; 365$$

where $C_{sp}$ is the average number of daily posts converted to sales, $TF_i$ (34) is the total number of followers of the top five influencers per platform i, $AvPo_i$ (37) is the average daily posts per platform i, $CTR_i$ (35) is the click-through rate for platform i, and $CR_i$ (36) is the conversion rate for platform i.

Multiplying $C_{sp}$ by the average price extracted from the e-commerce platform returns the total e-commerce value of the target species. To assign this value to the target species' population, $C_{sp}$ is divided by the total global population size of the target species, and then multiplied by the specific population size:

$$ECV_{sp} = (C_{sp} \; x \; AP_{sp} \; / \; n_{total}) \; x \; n_{sp}$$

where $ECV_{sp}$ (33) is the e-commerce value, $C_{sp}$ is the average number of daily posts converted to sales, $AP_{sp}$ (38) is the average price of relevant items sold on the e-commerce platform, $n_{total}$ (39) is the total global population size of the target species and $n_{sp}$ (40) is the population size of the target species that is being valued.

5. Human-centric Value (HCV(63))

The Human-centric value is the benefit to be gained as a direct effect of the target species population within a specific area. The estimation of this value may not find application in all species or human activities, therefore in some cases it will have a value of 0. If a direct effect is recognized, a second Bayesian network is built which will also include the human related factor of interest. Human related factors may involve human activities such as agricultural yield or tourism. This measure will be assigned to the target species' geographic range. Utilizing the Bayesian network properties, the probabilities for a "low" and "high" return for the specific human factor will be affected by the probabilities for a "low" and "high" population of the target species. Given the average price per measurement unit for each particular product or service for the given year, the Human-centric value is estimated:

If the target species current population falls within the "low" range, then the formula for the human-centric value is:

$$HCV_{sp} = ([P(l \mid h) \; x \; R_i + P(l \mid l) \; x \; R_i] - [P(h \mid h) \; x \; R_i + P(h \mid l) \; x \; R_i])$$

If the target species current population falls within the "high" range, then the formula for the human-centric value is:

$$HCV_{sp} = ([P(h \mid h) \times R_i + P(h \mid l) \times R_i] - [P(l \mid h) \times R_i + P(l \mid l) \times R_i])$$

where

$HCV_{sp}$ (63) = the human-centric value for the target species,

$P(h \mid h)$ (64) = the probability for a high outcome given the probability for a high species population,

R (65) = average price per measurement unit for product or service i,

$P(h \mid l)$ (66) = is the probability for a low outcome given the probability for a high species population, and

$P(l \mid h)$ (67) = probability for a low outcome given the probability for a high species population,

$P(l \mid l)$ (68) = probability for a low outcome given the probability for a low species population,

y (69) = human centric variable.

6. Option Pricing (OV(41))

This section outlines how Option Pricing Theory is used to calculate a hedging value or price that a person would be willing to pay to prevent the population from falling below the Minimum Viable Population level or rising above the Carrying Capacity level.

6.1 Carrying Capacity and Minimum Viable Population

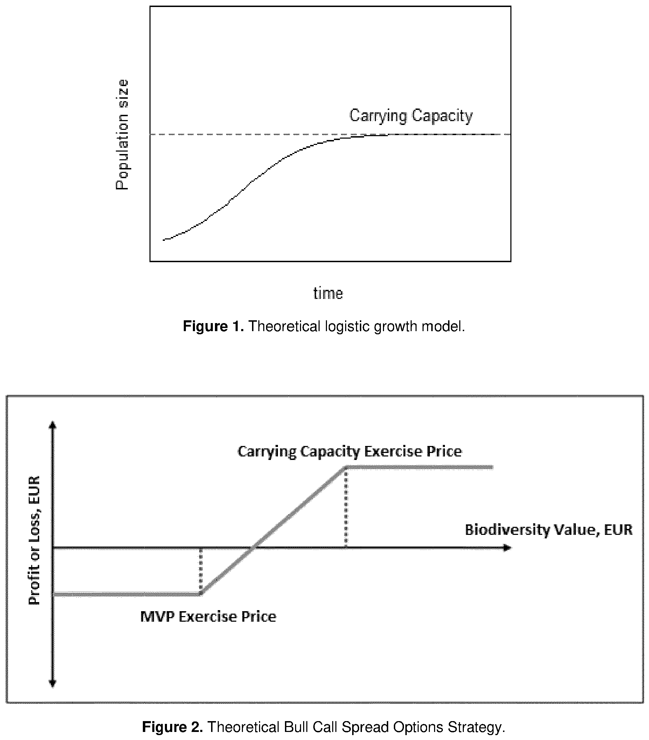

Carrying Capacity (K) of a population is defined as the maximum population size that a species can have in a specific area with finite resources (Del Monte-Luna et al., 2004). Natural populations tend to follow a logistic growth (as shown in Figure 1), which means that as population size increases over time, its growth rate (i.e. change in population size for a certain time period divided by initial population size) decreases until it reaches values around zero at carrying capacity.

To estimate K for the target species, a modified version of a method by Andersen et al. (2017) will be applied:

$$K_{sp} = PD_{sp} \times r_{sp}$$

where $K_{sp}$ is carrying capacity (44), $PD_{sp}$ (42) is population density (number of individuals/km$^2$) of the target species' healthiest population. $r_{sp}$ (43) is the maximum known range of the species within the specified area (measured in km$^2$). Target species range map geo-processing within the specified area will be performed with QGIS.

The Minimum Viable Population (MVP) is theoretically defined as the smallest size that a species' population can have that will ensure its survival despite stochasticity or confronting factors (Gilpin, 1986). In practice, estimating a species' MVP is to find the population size in a specific area that has a specified probability of survival and genetic diversity over a pre-specified period into the future (Wang et al., 2019). The widely accepted thresholds in estimating MVP is for the population to have at least 0.99 probability of survival and at least 0.9 genetic diversity within the pre-specified period (Reed et al., 2003), but these thresholds depend on the target species specific biology and ecology.

To estimate the MVP for the target species, a Population Viability Analysis (PVA) is performed, which simulates population trends taking into account:

- species-specific data, such as reproductive system and genetics
- population-specific data, such as mortality rates, initial population size and K
- management data such as harvest and supplementation
- probability of catastrophes and / or other stochastic events

PVA simulations are performed within a time-frame of 30 years, which is the average human generation time. The method consists of performing PVAs, starting with current population size and progressively decreasing it, until the population size is reached below which, the survival and genetic diversity thresholds specified above, are crossed. This population size will be the MVP for the specific target species in the specific ecosystem.

6.2 Option Pricing Strategy

A call option is a financial instrument that gives the holder a right to purchase an asset at a specified price (exercise price) on or before a specified expiration date. The purchase price of the option is called the premium and represents the price the purchaser of the call pays for the right to exercise the option if it becomes profitable to do so. The call option can therefore be used as a hedge against an adverse movement in the price of an underlying asset. Various call options can be combined to form an option strategy.

A Bull Call Spread is an option strategy whereby an investor would purchase one call option at a specified exercise price and sell one call option at a higher specified exercise price. Both call options have the identical expiration dates and based on the same underlying asset.

In order for the Bull Call Spread strategy to be successful, the investor needs the population size to increase (and thus the value to increase). However, the increase in population should be limited or else its value will begin to decline. This strategy therefore caps the value once carrying capacity is reached and hedges against lost value caused by the population falling below the MVP size, as shown in Figure 2.

The traditional Black Scholes Pricing Model (Chriss, 1997) is adapted into a novel option pricing model for individual species in order to determine the premium for this Bull Call Spread. The Black Scholes Pricing Model is a seminal model used to calculate the theoretical value for a put or call option based on six variables, namely (i) volatility, (ii) type of option, (iii) underlying stock price, (iv) time, (v) exercise or strike price, and (vi) risk-free rate. The core principles for the biodiversity option value align with the Black Scholes Pricing Model. The value of the option is calculated as:

$$d_{i1} = \frac{ln\left(\frac{S_0}{X_i}\right) + T\left(r + \frac{\sigma^2}{2}\right)}{\sigma\sqrt{T}} \quad \text{and} \quad d_{i2} = d_{i1} - \sigma\sqrt{T} \text{ (Teall, 2018)}$$

where

So (62) = value of the population at the current population size. This value is calculated as the sum of Willingness-to-Pay, Carbon Credits, Economic, E-commerce and Human-centric values.

i = scenario at minimum viable population size (MVP) or carrying capacity population size (K)

$X_i$ (52) = value of population at size i. This value is calculated as the sum of Willingness-to-Pay, Carbon Credits, Economic, E-commerce and Human-centric values at the MVP ($X_{MVP}$) and carrying capacity ($X_K$) population size scenarios.

with $X_{MVP}$ (53) = the sum of Willingness-to-Pay, Carbon Credits, Economic, E-commerce and Human-centric values multiplied by the probability of a high population given the population is at its MVP size divided by the probability of a high population given the population is at its current size:

$$X_{MVP} = \frac{sum\ of\ values\ *\ [P(high\ ppl\ |\ MVP\ ppl)]}{P(high\ ppl\ |current\ ppl)}$$

and $X_K$ (54) = the sum of Willingness-to-Pay, Carbon Credits, Economic, E-commerce and Human-centric values multiplied by the probability of a high population given the population is at its CC size divided by the probability of a high population given the population is at its current size:

$$X_K = \frac{sum\ of\ values\ *\ [P(high\ ppl\ |\ CC\ ppl)]}{P(high\ ppl\ |current\ ppl)}$$

T = duration (years) or time to maturity of the option (51)

r = government bond rate (55)

$\sigma$ = standard deviation (50) of current population growth rate. This is a modification of the standard formula that would normally consider the implied volatility of the annualised continuously compounded rate of return of the underlying asset.

To calculate each of the two option prices, it is necessary to determine the normal distribution z-score that corresponds to the call option's delta ($N(d_1)$) and the normal distribution z-score that corresponds to the probability that the call option will be exercised when the option matures ($N(d_2)$).

$$C_{MVP} = S_0 N(d_{MVP1}) - Xe^{-rT} N(d_{MVP2})$$

where $C_{MVP}$ (56) is the premium for the long call option at the MVP population level, $N(d_{MVP1})$ and $N(d_{MVP2})$ are the normal distribution values of $d_{MVP1}$ (58) and $d_{MVP2}$ (59) respectively.

$$C_K = S_0 N(d_{K1}) - Xe^{-rT} N(d_{K2})$$

where $C_K$ is the premium for the short call option at the carrying capacity population level, $N(d_{K1})$ and $N(d_{K2})$ are the normal distribution values of $d_{K1}$ (60) and $d_{K2}$ (61) respectively.

Total cost or price willing to be paid for the hedge strategy to maintain the population value between the minimum viable population size ($C_{MVP}$) (56) and the carrying capacity population size ($C_K$) (57) is calculated as: OV = CMVP - CK.

Total Species Existence Value and Conservation Impact Value

The purpose of the method is to extrapolate two key values for the computer-based calculator: (i) a defined and measurable total economic value based on current population size for a predetermined species in a set geolocation and (ii) a measurable financial impact value of conserving the same predetermined species in the same set geolocation.

These individual values described above are calculated and combined as a sum-of-the-parts. In summary, the individual parts include:

- Willingness-to-Pay (function of the ecosystem and the population) - WTP
- Carbon credits (function of the ecosystem and the population) - CC
- Economic value (function of the ecosystem and the population) - EV
- E-commerce (function of the species and the population) - E-Com
- Human-centric value (function of the species and the population) - HC
- Option pricing (function of the species and the population) - OV

The total value of the species based on the current population level in the specified geolocation can therefore be calculated as:

Total Species Existence Value (TSEV) = WTP + CC + EV + E-Com + HC + OV

This represents the total defined and measurable total economic value of the predetermined species based on its current population size. To determine the impact value of conservation, a third Bayesian network is built, which includes the projected increase of the species population. The increased population values are extracted from the results of a PVA analysis, running a scenario of a conservation effort to increase the species population within a 30-year time period. The Conservation Value (CV), defined as:

$$CV = \frac{TSEV * [P(hppl \mid \uparrow ppl)]}{P(hppl \mid cppl)}$$

where CV is the species Conservation Value, TSEV is the species total economic value, P(hppl |↑) is the probability of a high population size given the projected increase of the population size, and P(hppl | cppl) is the probability of a high population size given the current population size.

Finally, the Conservation Impact Value (CIV) of an investment in the conservation of the species is defined as:

CIV = CV − TSEV

Description of at least one way of carrying out the invention

An application of the present invention is described below, for the calculation of the total economic value and the impact value for a cheetah (*Acinonyx jubatus*) population within the Kruger National Park in South Africa, with no intention to limit the present invention to an animal or terrestrial environment, as it can be applied to other types of organisms and environments.

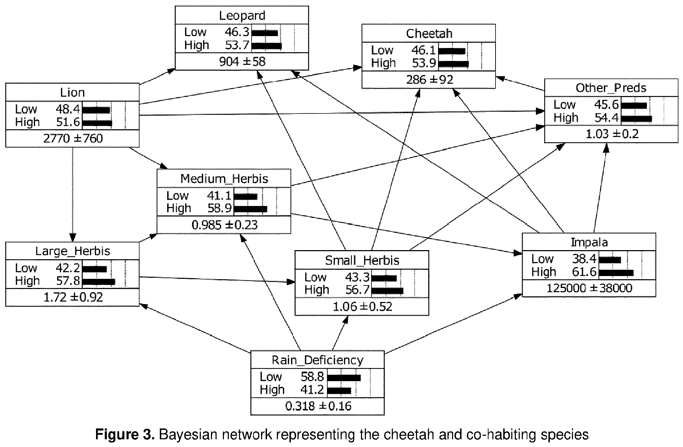

Following the methods outlined in "Detailed description of the invention", the cheetah and the species with which it co-habits were identified and built into a Bayesian network. For the simplification of the network, similar species were grouped by type and size. The Bayesian network with the cheetah as the target species, including the conditional dependencies between the network components and with the arrows indicating the direction of the relationships between the network components, is shown in Figure 3.

1. Willingness-to-Pay

To estimate the WTP (1) for the cheetah population in Kruger National Park, a database was created containing geotagged photo metadata with the word "cheetah" in them, taken within the bounds of Kruger National Park from photos shared on the platform Flickr within 2019, using the API approach and consequent method from "Detailed description of the invention". A truncated Poisson regression model was built and following the methods outlined in "Detailed description of the invention", the WTP for the specific cheetah population was calculated:

$$WTP_{sp} = 0.1 \times 216.65 \times 1{,}892{,}128 = EUR\ 40{,}993{,}008$$

2. Carbon Credits Value

Following the method elaborated in "Detailed description of the invention", carbon sequestration data, greenhouse gasses emissions per capita data and population density data were extracted for the area within Kruger National Park. Net carbon storage capacity was calculated:

$$NetCS_{eco} = 604{,}035 - 634{,}940 = -30.905\ tons$$

In this specific example, carbon storage cannot offset the carbon emissions produced in the area. Furthermore, the target species, the cheetah, has not been shown to affect carbon sequestration. As such, CC (7) value is EUR 0.

3. Economic Value

Following the method outlined in "Detailed description of the invention", the economic components were identified for the cheetah. Of the 27 potential economic activities, six can be applied to the cheetah: consumer goods, education, employment, hotels, restaurants and tourism, with the Kruger National Park's historic financials, the South African economy and the South African risks being applied when calculating the WACC (32) and growth rates. According to Kruger National Park visitor preference surveys, the cheetah can be attributed 10% of the value created by the Kruger National Park.

Table 3 shows the applicable annual sales, margins and variable values for each of the six applicable sectors, and the resulting value created by each sector that is attributable to the cheetah. The DCF was carried out using 10 years of annual forecasts (2021 to 2030) plus a forecast to perpetuity (terminal value). This was based on the underlying growth in demand from tourists to the Kruger National Park, sourced from historic visitor trends, average prices, regional employment levels and average visitor nights.

**Table 3.**

|  | Consumer Goods | Education | Employment | Hotels | Restaurants | Tourism |
|---|---|---|---|---|---|---|
| Forecasted sales revenue attributable to the cheetah (annual 2021 -Terminal), EURm | 0.4-0.8 | 0.3-0.6 | 1.5-1.8 (in the case of employment this refers to household income) | 13.9-30.1 | 2.5-5.3 | 4.1-8.9 |

(continued)

| | Consumer Goods | Education | Employment | Hotels | Restaurants | Tourism |
|---|---|---|---|---|---|---|
| Forecasted operating profit as a percentage of sales | 6.1 | 9.9 | n.a. | 20.1 | 16.5 | 10.3 |
| Forecasted capital expenditure or investment as a percentage of sales | 1.0 | 10.0 | n.a. | 138.9 | 65.4 | 64.5 |
| Forecasted depreciation as a percentage of capex | 110.0 | 133.7 | n.a. | 110.0 | 110.0 | 110.0 |
| Forecasted changes in net working capital as a percentage of sales | 7.5 | 9.8 | n.a. | 8.4 | 2.9 | 26.2 |
| FCFF attributable to the cheetah (annual 2021-Terminal), EURk | 20.5-44.6 | 22.3-38.1 | 1,500-1,828.5 | 942.0-2,048.2 | 252.8-549.6 | 102.5-222.8 |
| Risk free rate, % | 9.6 | 9.6 | 9.6 | 9.6 | 9.6 | 9.6 |
| Equity risk premium, % | 10.6 | 10.6 | 10.6 | 10.6 | 10.6 | 10.6 |
| Beta | 0.8 | 1.1 | 1.0 | 0.8 | 0.7 | 0.8 |
| Country risk premium, % | 4.6 | 4.6 | 4.6 | 4.6 | 4.6 | 4.6 |
| Small company premium, % | 2.3 | 2.3 | 2.3 | 2.3 | 2.3 | 2.3 |
| Species risk premium, % | 1.0 | 1.0 | 1.0 | 1.0 | 1.0 | 1.0 |
| Cost of Equity, % | 25.8 | 28.5 | 28.0 | 25.5 | 24.6 | 25.9 |
| Terminal growth rate, % | 5.5 | 5.5 | 5.5 | 5.5 | 5.5 | 5.5 |
| Discounted FCFF attributable to the cheetah (annual 2021 - | 16.3-22.2 | 13.4-17.4 | 687.7-1,171.8 | 750.8-1,061.1 | 202.8-318.2 | 81.4-109.3 |
| Terminal), EURk | | | | | | |
| EntV, EUR | 112,685 | 96,926 | 5,860,191 | 5,259,405 | 1,478,372 | 559,419 |

Based on the existing cheetah population, the probability of extinction is calculated at less than 10%, and thus a species specific premium of 1% is added.

The economic value based on the current cheetah population is the sum of these six values, leaving a total economic value for the cheetah population at EUR 13,157,387.

4. E-commerce Value

As elaborated in "Detailed description of the invention", an API approach was followed and data from www.ebay.com were extracted for products containing the keyword "cheetah" in the books, toys, DVDs/movies and art categories, that were added for sale within 2019 and, after removing outliers, their average price was calculated. Following the method outlined in "Detailed description of the invention", the values in Table 4. Were sourced and the E-commerce value of the specific cheetah population was calculated:

Table 4.

|  | CTR | CR | AvgPosts | TF |
|---|---|---|---|---|
| Instagram | 0.52% | 3% | 1.5 | 449,400 |
| YouTube | 0.33% | 0.5% | 0.3 | 2,007,000 |

$$ECV_{sp} = (1,470,315 / 6,674) \times 388 = EUR\ 85,478$$

5. Human-centric Value

The human-related factor that currently receives a direct effect from the cheetah population in this particular environment is tourism. Following the method outlined in "Detailed description of the invention", a second Bayesian network was built and the probabilities of "high" or "low" visitor revenue given the probabilities of "high" or "low" cheetah population were calculated. Currently, this cheetah population falls within its high range, so HCV was calculated by subtracting the "low" population values from the "high" population values as such:

$$HCV_{sp} = (0.625 \times 7,104,250 + 0.375 \times 6,496,043) - (0.25 \times 7,104,250 + 0.75 \times 6,496,043) = 228,078\ €$$

6. Option Pricing

Following the methods outlined in "Detailed description of the invention", the MVP and K (7) populations sizes for the cheetah were calculated to be 18 and 891 correspondingly. A population crash scenario for 30 years was modelled, simulating the real threats faced by the cheetah: overhunting and habitat loss. The population sizes per year simulated by the model were incorporated into the third Bayesian Network, and the probability for a high population at the MVP population size was calculated. The probability for a high population under the K (7) scenario was calculated by running a simulation model for 30 years into the future, with the current conditions faced by the specific cheetah population, which is conserved within a protected area. Within this timeframe, the CC was reached.

Once the probabilities of a high population under the MVP (43%) and K (55%) (7) scenarios were calculated, they were used as per the described method. The value of purchasing the call option for the MVP population was estimated at EUR 51,767,626 and the value of selling the call option of the K (7) population was estimated at EUR 51,015,260. Therefore, the value of the Option Pricing, which is the price paid to keep the value of the cheetah population between MVP and K size was estimated as:

$$OV = 51,767,626 - 51,015,260 = EUR\ 752,365$$

Total Species Existence Value and Conservation Impact Value

The TSEV of the specific cheetah population was calculated following the method described in "Detailed description of the invention" as:

$$TSEV = 40,993,008 + 0 + 13,157,387 + 85,478 + 228,078 + 752,365 = EUR\ 55,216,316$$

The probability of a high population, under a conservation scenario that assumed decreased mortality in the population for 30 years into the future, was calculated at 55%. The probability of a high population under current conditions was calculated at 49.5%. Consequently, Conservation Value was calculated as such:

$$CV = (55,216,316 \times 55)/49.5 = EUR\ 61,351,462$$

Finally, the Conservation Impact Value (CIV) for the specific cheetah population was calculated as:

$$CIV = 61,351,462 - 55,216,316 = EUR\ 6,135,146$$

References

Andersen, L.H., Sunde, P., Pellegrino, I., Loeschcke, V., Pertoldi, C., 2017. Using population viability analysis, genomics, and habitat suitability to forecast future population patterns of Little Owl Athene noctua across Europe. Ecology and evolution 7, 10987-11001.

Augeraud-Véron, E., Fabbri, G., & Schubert, K. (2019). The value of biodiversity as an insurance device. American journal of agricultural economics, 101(4), 1068-1081.

Bartkowski, B., Lienhoop, N., & Hansjürgens, B. (2015). Capturing the complexity of biodiversity: A critical review of economic valuation studies of biological diversity. Ecological Economics, 113, 1-14.

Bertram, C., & Rehdanz, K. (2013). On the environmental effectiveness of the EU Marine Strategy Framework Directive. Marine Policy, 38, 25-40.

Bojic, I., Massaro, E., Belyi, A., Sobolevsky, S., Ratti, C., 2015. Choosing the right home location definition method for the given dataset, International Conference on Social Informatics. Springer, pp. 194-208.

Boyle, K. J. (2003). Introduction to revealed preference methods. In A primer on nonmarket valuation (pp. 259-267). Springer.

Bulte, E., van Soest, D. P., Van Kooten, G. C., & Schipper, R. A. (2002). Forest conservation in Costa Rica when nonuse benefits are uncertain but rising. American journal of agricultural economics, 84(1), 150-160.

Chan, K. M., Goldstein, J., Satterfield, T., Hannahs, N., Kikiloi, K., Naidoo, R., Vadeboncoeur, N., & Woodside, U. (2011). Cultural services and non-use values. Natural capital: Theory and practice of mapping ecosystem services, 206-228.

Chriss, N. (1997). Black-Scholes and beyond : option pricing models. McGraw-Hill.

Creel, M.D., Loomis, J.B., 1990. Theoretical and empirical advantages of truncated count data estimators for analysis of deer hunting in California. American journal of agricultural economics 72, 434-441.

De Valck, J., & Rolfe, J. (2019). Comparing biodiversity valuation approaches for the sustainable management of the Great Barrier Reef, Australia. Ecosystem Services, 35, 23-31.

Del Monte-Luna, P., Brook, B.W., Zetina-Rejón, M.J., Cruz-Escalona, V.H., 2004. The carrying capacity of ecosystems. Global ecology and biogeography 13, 485-495.

Di Corato, L., Moretto, M., & Vergalli, S. (2018). The effects of uncertain forest conservation benefits on long-run deforestation in the Brazilian Amazon. Environment and Development Economics, 23(4), 413-433.

Fezzi, C., Bateman, I.J., Ferrini, S., 2014. Using revealed preferences to estimate the value of travel time to recreation sites. Journal of Environmental Economics and Management 67, 58-70.

Ghermandi, A. (2018). Integrating social media analysis and revealed preference methods to value the recreation services of ecologically engineered wetlands. Ecosystem Services, 31, 351-357.

Gilpin, M.E., 1986. Minimal viable populations: processes of species extinction. Conservation biology: the science of scarcity and diversity.

Grabowski, R. J. (2018). The Size Effect Continues To Be Relevant When Estimating the Cost of Capital. Business Valuation Review, 37(3), 93-109.

Haghjou, M., Hayati, B., Pishbahar, E., & Molaei, M. (2019). Estimating the Non-use Values and Related Compensative Surplus of Arasbaran Forests in Iran: An Application of the Choice Experiment Method. In Sustainable Agriculture and Agribusiness in Iran (pp. 63-77). Springer.

Laurila-Pant, M., Lehikoinen, A., Uusitalo, L., & Venesjärvi, R. (2015). How to value biodiversity in environmental management? Ecological indicators, 55, 1-11.

Li, L., Goodchild, M.F., Xu, B., 2013. Spatial, temporal, and socioeconomic patterns in the use of Twitter and Flickr. Cartography and geographic information science 40, 61-77.

Pascual, U., Muradian, R., Brander, L., Gómez-Baggethun, E., Martín-López, B., Verma, M., Armsworth, P., Christie, M., Cornelissen, H., & Eppink, F. (2010). The economics of valuing ecosystem services and biodiversity. The economics of ecosystems and biodiversity: Ecological and economic foundations, 183-256.

Pearce, D., Atkinson, G., & Mourato, S. (2006). Cost-benefit analysis and the environment: recent developments. Organisation for Economic Co-operation and development.

Peek, E. (2016). A study of differences in returns between large and small companies in Europe. International Corporate Finance eJournal.

Petrolia, D. R., Guignet, D., Whitehead, J., Kent, C., Caulder, C., & Amon, K. (2020). Nonmarket Valuation in the Environmental Protection Agency's Regulatory Process. Applied Economic Perspectives and Policy.

Reed, D.H., O'Grady, J.J., Brook, B.W., Ballou, J.D., Frankham, R., 2003. Estimates of minimum viable population sizes for vertebrates and factors influencing those estimates. Biological conservation 113, 23-34.

Seddon, N., Mace, G. M., Naeem, S., Tobias, J. A., Pigot, A. L., Cavanagh, R., Mouillot, D., Vause, J., & Walpole, M. (2016). Biodiversity in the Anthropocene: prospects and policy. Proceedings of the royal society B: biological sciences, 283(1844), 20162094.

Sinclair, M., Ghermandi, A., Sheela, A.M., 2018. A crowdsourced valuation of recreational ecosystem services using social media data: An application to a tropical wetland in India. Science of the total environment 642, 356-365.

Teall, J. L. (2018). Financial Trading and Investing (Second Edition). Academic Press.

Viebig, J., Varmaz, A., & Poddig, T. (2008). Equity valuation models from leading investment banks. John Wiley & Sons.

Wang, T., Fujiwara, M., Gao, X., Liu, H., 2019. Minimum viable population size and population growth rate of freshwater fishes and their relationships with life history traits. Scientific reports 9, 1-8.

## Claims

1. A method to calculate the Total Species Existence Value (TSEV) of a given wildlife species within a given area. The method is a cumulation of six types of values: (1) Willingness-to-Pay, (2) Carbon Credits, (3) Economic, (4) E-commerce, (5) Human-centric and (6) Option Pricing.

2. A method to calculate the Impact Value derived from the change in the probability of the underlying target species having a high population brought on by an investment or conservation effort of the species.

**3.** A process to implement the methods according to claim 1 and claim 2.

**Figure 1.** Theoretical logistic growth model.

**Figure 2.** Theoretical Bull Call Spread Options Strategy.

**Figure 3.** Bayesian network representing the cheetah and co-habiting species

**Figure 4.** Diagram representing the top-down view of the Conservation Impact Value (CIV) and constituting variables

**Europäisches Patentamt**
**European Patent Office**
**Office européen des brevets**

# EUROPEAN SEARCH REPORT

Application Number

EP 20 02 0503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/034772 A1 (BALAN VARUN [US]) 30 January 2020 (2020-01-30) * paragraphs [0007] - [0012], [0099], [0146] - [0152]; claims; figure 20 * ----- | 1-3 | INV. G06Q40/06 |
| X | US 2004/039676 A1 (TRAINER DAVID [US]) 26 February 2004 (2004-02-26) * paragraphs [0050], [0075], [0087]; claims 40,51,52 * ----- | 1-3 | |

TECHNICAL FIELDS SEARCHED (IPC)

G06Q

The present search report has been drawn up for all claims

| Place of search | Date of completion of the search | Examiner |
|---|---|---|
| Munich | 19 March 2021 | Herry, Tzvetanka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                    

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 02 0503

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2021

| Patent document cited in search report | Publication date | Patent family member(s) | Publication date |
|---|---|---|---|
| US 2020034772 A1 | 30-01-2020 | US 2020034772 A1<br>WO 2020023960 A1 | 30-01-2020<br>30-01-2020 |
| US 2004039676 A1 | 26-02-2004 | AU 2003255255 A1<br>GB 2407421 A<br>US 2004039676 A1<br>US 2010241592 A1<br>WO 2004015537 A2 | 25-02-2004<br>27-04-2005<br>26-02-2004<br>23-09-2010<br>19-02-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDERSEN, L.H. ; SUNDE, P. ; PELLEGRINO, I. ; LOESCHCKE, V. ; PERTOLDI, C.** Using population viability analysis, genomics, and habitat suitability to forecast future population patterns of Little Owl Athene noctua across Europe. *Ecology and evolution,* 2017, vol. 7, 10987-11001
- **AUGERAUD-VÉRON, E. ; FABBRI, G. ; SCHUBERT, K.** The value of biodiversity as an insurance device. *American journal of agricultural economics,* 2019, vol. 101 (4), 1068-1081
- **BARTKOWSKI, B. ; LIENHOOP, N. ; HANSJÜRGENS, B.** Capturing the complexity of biodiversity: A critical review of economic valuation studies of biological diversity. *Ecological Economics,* 2015, vol. 113, 1-14
- **BERTRAM, C. ; REHDANZ, K.** On the environmental effectiveness of the EU Marine Strategy Framework Directive. *Marine Policy,* 2013, vol. 38, 25-40
- Choosing the right home location definition method for the given dataset. **BOJIC, I. ; MASSARO, E. ; BELYI, A. ; SOBOLEVSKY, S. ; RATTI, C.** International Conference on Social Informatics. Springer, 2015, 194-208
- Introduction to revealed preference methods. **BOYLE, K. J.** In A primer on nonmarket valuation. Springer, 2003, 259-267
- **BULTE, E. ; VAN SOEST, D. P. ; VAN KOOTEN, G. C. ; SCHIPPER, R. A.** Forest conservation in Costa Rica when nonuse benefits are uncertain but rising. *American journal of agricultural economics,* 2002, vol. 84 (1), 150-160
- **CHAN, K. M. ; GOLDSTEIN, J. ; SATTERFIELD, T. ; HANNAHS, N. ; KIKILOI, K. ; NAIDOO, R. ; VADEBONCOEUR, N. ; WOODSIDE, U.** Cultural services and non-use values. *Natural capital: Theory and practice of mapping ecosystem services,* 2011, 206-228
- **CHRISS, N.** Black-Scholes and beyond : option pricing models. McGraw-Hill, 1997
- **CREEL, M.D. ; LOOMIS, J.B.** Theoretical and empirical advantages of truncated count data estimators for analysis of deer hunting in California. *American journal of agricultural economics,* 1990, vol. 72, 434-441
- **DE VALCK, J. ; ROLFE, J.** Comparing biodiversity valuation approaches for the sustainable management of the Great Barrier Reef, Australia. *Ecosystem Services,* 2019, vol. 35, 23-31

- **DEL MONTE-LUNA, P. ; BROOK, B.W. ; ZETINA-REJÓN, M.J. ; CRUZ-ESCALONA, V.H.** The carrying capacity of ecosystems. *Global ecology and biogeography,* 2004, vol. 13, 485-495
- **DI CORATO, L. ; MORETTO, M. ; VERGALLI, S.** The effects of uncertain forest conservation benefits on long-run deforestation in the Brazilian Amazon. *Environment and Development Economics,* 2018, vol. 23 (4), 413-433
- **FEZZI, C. ; BATEMAN, I.J. ; FERRINI, S.** Using revealed preferences to estimate the value of travel time to recreation sites. *Journal of Environmental Economics and Management,* 2014, vol. 67, 58-70
- **GHERMANDI, A.** Integrating social media analysis and revealed preference methods to value the recreation services of ecologically engineered wetlands. *Ecosystem Services,* 2018, vol. 31, 351-357
- **GILPIN, M.E.** Minimal viable populations: processes of species extinction. *Conservation biology: the science of scarcity and diversity,* 1986
- **GRABOWSKI, R. J.** The Size Effect Continues To Be Relevant When Estimating the Cost of Capital. *Business Valuation Review,* 2018, vol. 37 (3), 93-109
- Estimating the Non-use Values and Related Compensative Surplus of Arasbaran Forests in Iran: An Application of the Choice Experiment Method. **HAGHJOU, M. ; HAYATI, B. ; PISHBAHAR, E. ; MOLAEI, M.** In Sustainable Agriculture and Agribusiness in Iran. Springer, 2019, 62-77
- **LAURILA-PANT, M. ; LEHIKOINEN, A. ; UUSITALO, L. ; VENESJÄRVI, R.** How to value biodiversity in environmental management?. *Ecological indicators,* 2015, vol. 55, 1-11
- **LI, L. ; GOODCHILD, M.F. ; XU, B.** Spatial, temporal, and socioeconomic patterns in the use of Twitter and Flickr. *Cartography and geographic information science,* 2013, vol. 40, 61-77
- **PASCUAL, U. ; MURADIAN, R. ; BRANDER, L. ; GÓMEZ-BAGGETHUN, E. ; MARTÍN-LÓPEZ, B. ; VERMA, M. ; ARMSWORTH, P. ; CHRISTIE, M. ; CORNELISSEN, H. ; EPPINK, F.** The economics of valuing ecosystem services and biodiversity. *The economics of ecosystems and biodiversity: Ecological and economic foundations,* 2010, 183-256

- **PEARCE, D. ; ATKINSON, G. ; MOURATO, S.** Cost-benefit analysis and the environment: recent developments. *Organisation for Economic Co-operation and development,* 2006
- **PEEK, E.** A study of differences in returns between large and small companies in Europe. *International Corporate Finance eJournal,* 2016
- **PETROLIA, D. R. ; GUIGNET, D. ; WHITEHEAD, J. ; KENT, C. ; CAULDER, C. ; AMON, K.** Nonmarket Valuation in the Environmental Protection Agency's Regulatory Process. *Applied Economic Perspectives and Policy,* 2020
- **REED, D.H. ; O'GRADY, J.J. ; BROOK, B.W. ; BALLOU, J.D. ; FRANKHAM, R.** Estimates of minimum viable population sizes for vertebrates and factors influencing those estimates. *Biological conservation,* 2003, vol. 113, 23-34

- **SEDDON, N. ; MACE, G. M. ; NAEEM, S. ; TOBIAS, J. A. ; PIGOT, A. L. ; CAVANAGH, R. ; MOUILLOT, D. ; VAUSE, J. ; WALPOLE, M.** Biodiversity in the Anthropocene: prospects and policy. *Proceedings of the royal society B: biological sciences,* 2016, vol. 283 (1844), 20162094
- **SINCLAIR, M. ; GHERMANDI, A. ; SHEELA, A.M.** A crowdsourced valuation of recreational ecosystem services using social media data: An application to a tropical wetland in India. *Science of the total environment,* 2018, vol. 642, 356-365
- **TEALL, J. L.** Financial Trading and Investing. Academic Press, 2018
- **VIEBIG, J. ; VARMAZ, A. ; PODDIG, T.** Equity valuation models from leading investment banks. John Wiley & Sons, 2008
- **WANG, T. ; FUJIWARA, M. ; GAO, X. ; LIU, H.** Minimum viable population size and population growth rate of freshwater fishes and their relationships with life history traits. *Scientific reports,* 2019, vol. 9, 1-8